# EUROPEAN PATENT APPLICATION

(11) **EP 1 519 258 A1**
(43) Date of publication of application: **30.03.2005**
(21) Application number: 04252836.4
(22) Date of filing: 15.05.2004
(51) Int. Cl.: G06F 1/00

(54) **Authentication method for creating a digital home network using a smartcard**

(30) Priority: 04.06.2003 KR 2003036010
(71) Applicant: Samsung Electronics Co., Ltd., Suwon-si, Gyeonggi-do (KR)
(72) Inventor: Jang, Yong-jin, Uiwang-si, Gyeonggi-do (KR); Kim, Myung-sun, Uiwang-si, Gyeonggi-do (KR); Choi, Yang-lim, Bundang-gu, Seongnam-si Gyeonggi-do (KR); You, Yong-kuk, Suwon-si, Gyeonggi-do (KR); Nam, Su-hyun, Seocho-gu (KR)
(74) Representative: Davies, Robert Ean

(57) **Abstract**

A method of establishing a home domain capable of reproducing multimedia content, and a smart card (500) therefor. The method includes creating (S4) a domain certificate (140) for a reproducing device (100) by inserting the smart card into the reproducing device, creating a session key by inserting the smart card into a home server (200), and verifying the domain certificate of the reproducing device and transmitting the created session key to the reproducing device if the device is a legitimate device. Alternatively, the method includes using an external certificate authority (300) to determine whether the reproducing device is a legitimate device. The smart card includes a certificate-creating module (570) for creating a domain certificate for a reproducing device when the smart card is inserted into the reproducing device, a session key-creating module (560) for creating a session key when the smart card is inserted into the home server, and a certificate-verifying module (580) for verifying the domain certificate of the reproducing device before transmission of the created session key to the reproducing device.

## Description

The present invention relates to a method of establishing a home domain capable of reproducing multimedia content and a smart card therefor, and more particularly but not exclusively, to a method of establishing a home domain and a smart card therefor, wherein a device constituting a home network is authenticated using a smart card in order to safely receive and reproduce digital data containing multimedia content provided from the outside.

With the development of the Internet, service providers providing a variety of content through the Internet are greatly increasing in number. The term "content" has been generally used to denote the contents or tables of books or papers. Recently, however, the term "content" is mainly used for collectively referring to digital information provided through a variety of wired/wireless communication networks. For example, such content includes a variety of programs or information provided through the Internet or PC communications, and movies, music and game software recorded in CD-ROMs.

As providing multimedia content through the Internet becomes more popular, there is a need for a method of safely distributing multimedia content. Particularly, although content was provided free through the Internet at an early stage, such a need has become even more urgent as content providing services increasingly charge for content use.

According to a conventional method of safely transmitting digital data containing multimedia content through the Internet, a content provider encrypts digital data to be transmitted and transmits the encrypted digital data through the Internet, and a user executes, on his/her computer, an application for decrypting the digital data received through the Internet and enjoys the content contained in the received digital data.

However, such a method is not sufficiently safe because it is very difficult to safely store decryption keys, which should be confidentially maintained for their security, in electronic products such as a computer. In the meantime, content providers want to prevent illegal copying of digital data containing multimedia content.

Recently, with the development of home network technology, there are many cases where home networks are established by connecting individual devices with one another. A user of a device that operates in a home network can cause multimedia content received through a specific device from the Internet or in a wireless manner to be reproduced through other devices. For example, a set-top box receives digital broadcasting content and transmits it to a digital TV, and a user can watch the broadcasting content through the digital TV. As another example, a user can receive a video and audio stream, which is provided from an Internet movie theater, by using a computer, and watch the received video and audio content through a digital TV connected to the computer. In this case, a content provider wants to prevent other, unauthorized users from illegally using digital data containing multimedia content provided by himself/herself.

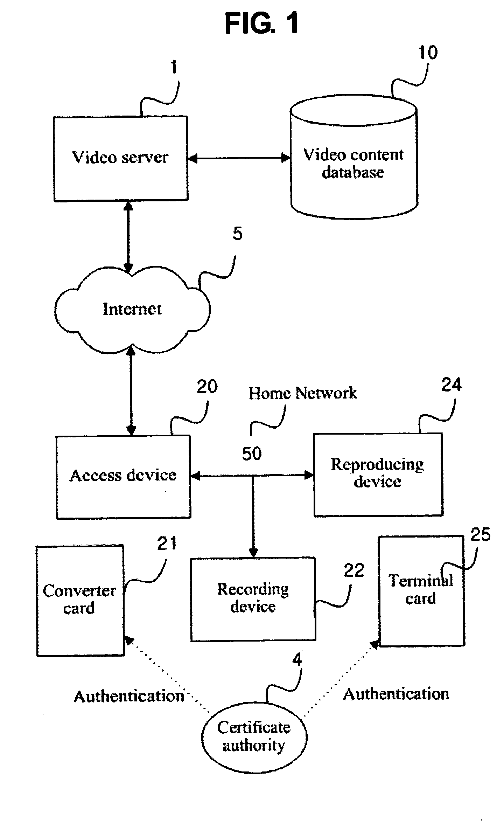

FIG. 1 is a block diagram schematically showing the configuration of a home domain system in the related art.

A video server 1 is connected to a video content database 10 and provides a user with video content through the Internet 5. An access device 20 is connected to the Internet 5 and generally positioned on the side of a user who wants to access a video program. The access device 20 may be a computer or a digital decoder called a set-top box. The digital decoder has a user interface such as a keypad, screen or remote control that enables a user to select a desired video program. In the meantime, a reproducing device 24 is connected to the access device 20 through a home network 50 and reproduces video data received from the access device 20. In the meantime, a storing device 22 may be connected to the home network 50 and may be a digital video recorder or a medium capable of performing recording on an optical disk such as a digital versatile disk (DVD). Further, a converter card 21 is required for the access device 20 and a terminal card 25 is required for the reproducing device 24. Both the converter card 21 and terminal card 25 are smart cards and should be authenticated beforehand by a certificate authority 4. Operations of these devices will be described hereinafter.

The converter card 21 can create a session key A (not shown) for encrypting a content key that is a key for encrypting or decrypting content. The terminal card 25 constituting the same home network shares a common session key B (not shown). Namely, in a case where a plurality of reproducing devices 24 are connected to one access device 20 through the home network 50, all of the reproducing devices share the common session key B. To mutually transmit session key A and session key B between the access device 20 and the reproducing devices 24, the terminal card 25 has a public key necessary for encrypting and transmitting the session keys, and a public key certificate issued from the certificate authority 4. All of the reproducing devices 24 for establishing one home domain should have the terminal cards 25.

The smart cards 21 and 25 for use in establishing one domain in the home network may be set to form the same network and are sold by a seller, or the seller may visit a user's home in-person and help to establish one domain. Each of devices connected to one another to form a network checks whether its own card is one for forming the same network by using a public key certificate issued from the certificate authority 4. If the check is successfully performed, the public key certificate of the card is transmitted to a card of a counterpart device so that the public key can be authenticated. If the public key is authenticated, the common session key B of the network is transmitted to and utilized in the counterpart device with the use of the public key.

The procedures for establishing a home domain will be summarized as follows:
1. A user purchases smart cards that can constitute one network from a seller;
2. The user constructs a network by connecting the smart cards to devices;
3. A first terminal card 25 connected to the network creates a session key B that will be commonly used for the network;
4. A reproducing device 24 capable of transmitting the session key B in the constructed network verifies a public key certificate contained in a converter card 21 of an access device 20 by using a certificate authority's public key; and
5. If the public key certificate is verified, the session key B is encrypted with the public key and transmitted to the terminal card 25 of the reproducing device 24. In the meantime, if the session key B is transmitted to all other reproducing devices 24 connected to the home network 50 through the above procedures of Nos. 4 and 5, the preparation procedure for sharing content within the home network 50 is completed. When a procedure for sharing content proceeds after the preparation procedure is completed, a session key A is used for a procedure for encrypting/decrypting digital data containing a content key. That is, the session key A is encrypted with the session key B and transmitted, and then extracted by using the session key B in the reproducing device. Through such a method, a user can use digital data containing multimedia content in a safe manner.

However, according to such a method in the related art, each device possibly operates as a component constituting a home domain only if a smart card is mounted to each device. Thus, as the number of devices increases, a number of smart cards equal to the number of devices is required. Further, in a case where a seller sells a set of smart cards that can constitute one network and only devices having the smart cards can form one domain, an ill-intentioned seller may provide other users with a portion of the smart cards that can constitute the network. In such a case, other users who are provided with the residual smart card may easily enter into the constructed network, so that it is difficult to effectively prevent the invasion of individual privacy. In a case where a seller visited in-person and constructed a network and a user wants to extend the network later, i.e. a user purchases a new device, there is inconvenience in that the seller should again visit the purchaser on a case-by-case basis to reconstruct the network. In the meantime, to protect the benefit of content providers, there is a burden in that a certificate authority 4 for issuing, removing and managing certificates for devices and cards for use in a home domain should also manage again all the devices and cards.

Embodiments of the present invention aim to solve or at least address the aforementioned problems. An object of embodiments of the present invention is to provide a method by which a user can safely and conveniently establish a home domain by using a single smart card.

Another object of embodiments of the present invention is to provide a smart card for use in establishing a home domain.

According to one aspect of the present invention, there is provided a method of establishing a home domain by using a smart card, comprising the steps of creating a domain certificate for a reproducing device, which will establish the home domain, through a certificate-creating module of the smart card by inserting the smart card into the reproducing device; removing the smart card from the reproducing device after the creation of the domain certificate in the reproducing device, and creating a session key for establishing the home domain by inserting the smart card into a home server connected to the reproducing device through a network; and verifying the domain certificate of the reproducing device, and if the reproducing device is a device having a legitimate domain certificate, transmitting the created session key to the reproducing device.

Preferably, in the method of establishing the home domain by using the smart card according to the present invention, the reproducing device has a certificate issued from an external certificate authority, and the method further comprises the step of transmitting, by the home server, the certificate authority's certificate received from the reproducing device to the certificate authority and transmitting the created session key to the reproducing device only when the reproducing device is authenticated as a legitimate reproducing device by the certificate authority, thereby determining whether the reproducing device is a legitimate device.

In the meantime, the creation of the domain certificate is performed using a private key of the smart card, and the verification of the domain certificate is performed using of a public key of the smart card. The creation of the domain certificate is performed by encrypting a number, which has been obtained through a hash function using a MAC address and a public key of the reproducing device, with the private key of the smart card and storing it in the reproducing device; and the verification of the domain certificate is performed by comparing, by the home server, a number obtained through decryption of the created domain certificate received from the reproducing device using the public key of the smart card with the number obtained through the hash function using the MAC address and public key of the reproducing device, and by determining whether the numbers are the same.

Preferably, the home server encrypts the session key using a public key of the reproducing device and transmits the encrypted session key to the reproducing device, and the reproducing device decrypts the received session key using a private key of the reproducing device.

According to another aspect of the present invention, there is provided a smart card for establishing a home domain, comprising a certificate-creating module for creating a certificate for a reproducing device, which will constitute the home domain, when the smart card is inserted into the reproducing device; a session key-creating module for creating a session key that will be used for the digital data transmission to the reproducing device connected to a home server through a network, when the smart card is inserted into the home server; and a certificate-verifying module for receiving a domain certificate from the reproducing device and verifying the domain certificate, when the smart card is inserted into the home server to transmit the created session key to the reproducing device.

Preferably, the smart card further comprises a private key necessary for the creation of the domain certificate, and a public key necessary for the verification of the created domain certificate. At this time, the certificate-creating module creates the domain certificate by encrypting a number, which has been obtained through a hash function using a MAC address and a public key of the reproducing device, with the private key of the smart card, and the certificate-verifying module compares a number obtained through decryption of the domain certificate using the public key of the smart card with the number obtained through the hash function using the MAC address and public key of the reproducing device and determines whether the two numbers are the same.

For a better understanding of the invention, and to show how embodiments of the same may be carried into effect, reference will now be made, by way of example, to the accompanying diagrammatic drawings in which:
FIG. 1 is a block diagram schematically showing the configuration of a home domain system in the related art;
FIG. 2 is a block diagram schematically showing the configuration of a home domain system according to an embodiment of the present invention;
FIG. 3 is a block diagram showing a structure of a smart card according to another embodiment of the present invention;
FIG. 4 is a view illustrating a method of authenticating a device using a smart card terminal; and
FIG. 5 is a flowchart showing the process of establishing a home domain according to a further embodiment of the present invention.

Hereinafter, preferred embodiments of the present invention will be described in detail with reference to the accompanying drawings.

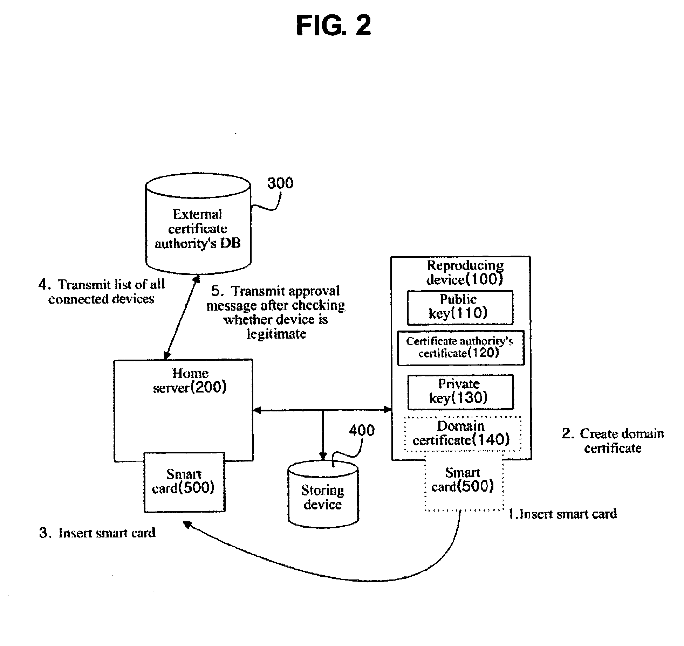

FIG. 2 is a block diagram schematically showing the configuration of a home domain system according to an embodiment of the present invention.

The home domain system comprises at least one reproducing device 100, a home server 200, and a smart card 500 for establishing a home domain by authenticating the reproducing device 100. The home domain system may further comprise a storing device 400 for storing multimedia content, and an external certificate authority 300 for verifying whether the reproducing device 100 is a legitimate device.

The reproducing device 100, the home server 200 and the storing device 400 are connected through a home network. The home server 200 may be connected to the external certificate authority 300 through the wired or wireless Internet. In the meantime, the smart card 500 of the present invention, which serves as a certificate authority for a plurality of devices constituting the home domain, is inserted into the reproducing device 100 constituting the home domain and issues a domain certificate 140 for the reproducing device.

First, the reproducing device 100 comprises a public key 110 for use in encrypting and transmitting a session key created by the home server 200, a private key 130 for use in decrypting the session key received from the home server; a certificate authority's certificate 120 authenticated by the external certificate authority 300 determining whether the device can be used in the home domain, and a domain certificate 140 created when the smart card 500 performs authentication.

The home server 200 provides digital data, which contain external multimedia content received through the Internet or satellite broadcasting, to the reproducing device 100 authenticated by the smart card 500 so that the reproducing device 100 may reproduce the data. According to an embodiment of the present invention, there is the following method of reproducing content by decrypting received, encrypted digital data. First, in a case where encrypted digital data are transmitted, the server 200 or the smart card 500 inserted into the server 200 has a content key for decrypting the encrypted digital data, so that the server or the smart card can decrypt the digital data and then provide them to the reproducing device 100 in a predetermined manner. However, if a plurality of keys are actually used for encrypting a lot of content data, this method may be ineffective. Therefore, a master key capable of decrypting the content key for decrypting the encrypted digital data is provided to the server 200 or the smart card 500 inserted into the server 200, so that the content key can be decrypted with the master key. Thereafter, the encrypted digital data and the decrypted content key are transmitted to the reproducing device 100 in a predetermined manner, or the encrypted digital data are decrypted with the content key and transmitted to the reproducing device 100 in a predetermined manner.

In the home domain, the method of transmitting the digital data to the reproducing device 100 may be implemented with a method of transmitting the digital data as they are. Alternatively, according to a preferred embodiment of the present invention, the digital data may be transmitted after being re-encrypted based on a key that can be shared by all devices constituting the home domain.

The external certificate authority 300 performs authentication for the smart card 500 and devices that will constitute the home network to determine whether the reproducing device 100 constituting the home domain is legitimate.

The storing device 400 is a device capable of storing multimedia content and may be a digital video recorder, or DVD or a hard drive (not shown) mounted in the home server 200. Data recorded in the storing device 400 may be implemented such that only legitimate reproducing devices 100 constituting the home domain can use the data, i.e. only devices having the domain certificate 140 can access the data.

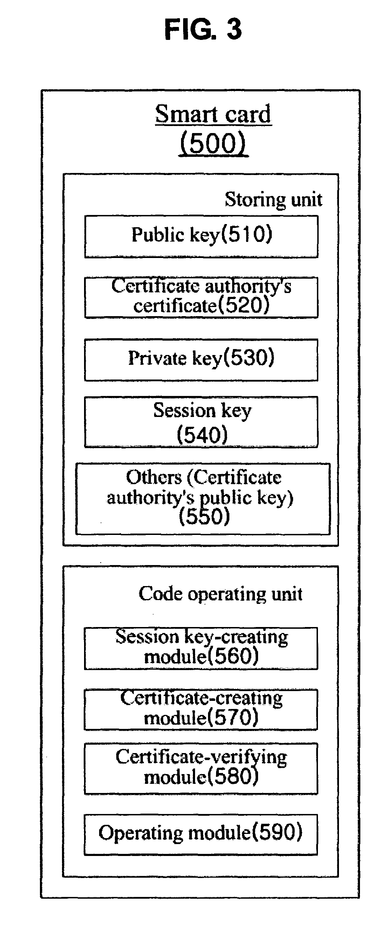

The smart card 500 will be described with reference to FIG. 3. FIG. 3 is a block diagram showing the structure of a smart card according to another embodiment of the present invention.

According to a preferred embodiment of the present invention, the smart card 500 includes a storing unit consisting of a nonvolatile memory for storing a certificate or key, and a code-operating unit for creating/verifying a key or certificate and performing other operations.

The storing unit will be explained first. The storing unit comprises a certificate authority's certificate 520, that is a public key certificate electronically signed by the external certificate authority 300, a private key 530 for use in creating the domain certificate 140 (FIG. 2) for a public key 110 of the reproducing device 100, a public key 510 for use in verifying the domain certificate, a session key 540 temporarily stored therein, and a storing space for storing other data. In the meantime, a master key capable of decrypting the content key for decrypting the encrypted digital data may be implemented to be stored in the storing unit of the smart card 500 or to be provided to the home server 200.

Next, the code-operating unit will be explained. The code-operating unit comprises a session key-creating block 560 for creating a session key, a certificate-creating block 570 for creating a certificate for authenticating the reproducing device 100 constituting the home domain, a certificate-verifying block 580 for verifying the domain certificate of the reproducing device, and an operating module 590 for performing other operations.

A procedure for establishing a home domain will be briefly described below. The smart card 500 is first inserted into a reproducing device 100 that will be used in establishing the home domain. The inserted smart card 500 creates the domain certificate 140 for the reproducing device 100 through a predetermined operation. When the domain certificate 140 is created, the smart card 500 is removed and the above steps are repeated for the next reproducing device 100. When the domain certificate is completely issued to all the reproducing devices 100, the smart card 500 is inserted into the home server 200. Then, the home server 200 transmits a list of all the reproducing devices connected through the home network from the smart card 500 to the external certificate authority 300 through the Internet. The external certificate authority 300 compares the list with data stored in its own database (DB). If one of the devices recorded in the received list is legitimate, the certificate authority 300 transmits an approval message to the home server 300. If the home domain is established through such a procedure, the reproducing device 100 can safely receive digital data from the home server 200 and reproduce them.

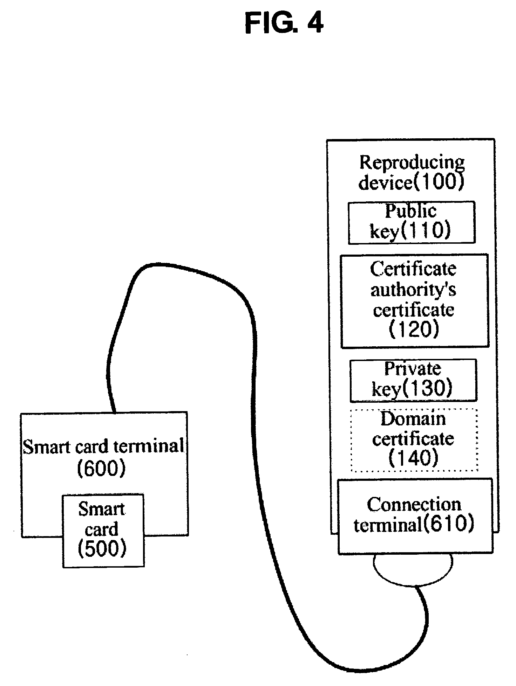

In the meantime, although the smart card 500 has been described as being inserted into the reproducing device 100 or home server 200, the smart card 500 does not necessarily exist in the reproducing device 100 in the present invention. Therefore, it is possible to issue the domain certificate 140 through the smart card 500 using a universal interface, e.g., IEEE 1394 or USB port, without preparing a slot for receiving the smart card 500 in the reproducing device 100, which will be described with reference to FIG. 4.

FIG. 4 is a view illustrating a method of authenticating a device using a smart card terminal.

FIG. 4 shows a smart card terminal 600 including a connection terminal 610 electrically connected to a universal interface of the reproducing device 100 so as to authenticate the reproducing device 100 without its own built-in slot for receiving the smart card 500. To authenticate the reproducing device 100 without a built-in slot, the connection terminal 610 of the smart card terminal 600 is first connected to the universal interface (not shown) of the reproducing device 100. Thereafter, the smart card 500 is inserted into a slot (not shown) in the smart card terminal 600. When the smart card 500 is inserted into the smart card terminal 600, the smart card 500 and the reproducing device 100 are electrically connected to each other as if the smart card 500 were inserted into the reproducing device 100.

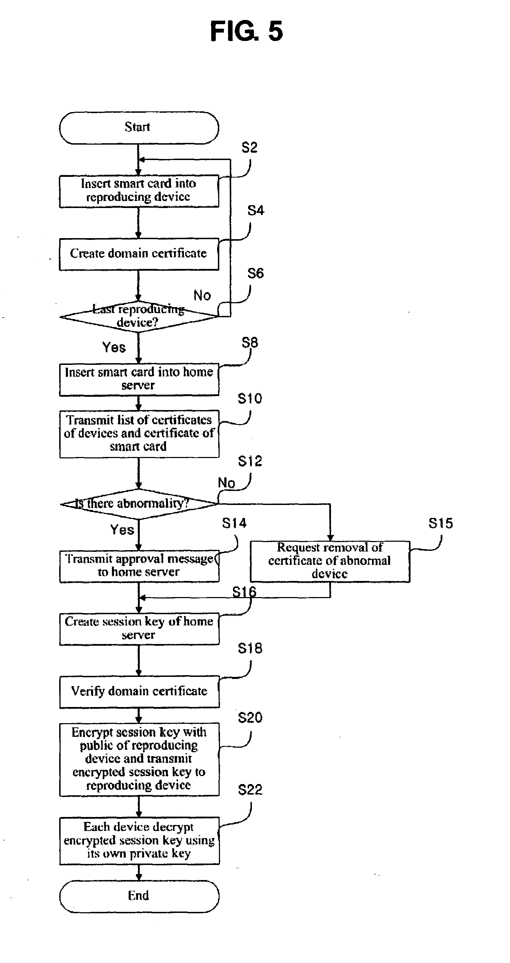

FIG. 5 is a flowchart showing the process of establishing a home domain according to a further embodiment of the present invention.

To establish the home domain, an authentication procedure for a device is initially required. To this end, the smart card 500 is inserted into the reproducing device 100 (S2). The smart card 500 inserted into the reproducing device 100 creates the domain certificate 140 through the certificate-creating module 570 by using the private key 530 (S4). Preferably, the domain certificate is created by encrypting an ID for enabling identification of the reproducing device, e.g., a number obtained through a hash function using a MAC address and the public key 110 of the reproducing device, with the private key 530 of the smart card 500. If there still remains a reproducing device 100 to which the domain certificate 140 should be issued (S6), steps S2 and S4 are repeated.

If the domain certificate 140 is completely issued to all the reproducing devices 100 (S6), the smart card 500 is removed and inserted into the home server 200 (S8).

Thereafter, the home server 200 transmits certificate lists of all the devices connected through the home network and the certificate 520 of the smart card 500 to the external certificate authority 300 (S10). At this time, the certificate 120 of each reproducing device 100 that will be transmitted to the external certificate authority 300 by the home server 200 may be received through the home network or the smart card 500. In the meantime, it is preferred that the reproducing device 100 also transmit the public key upon sending the certificate 120 to the smart card 500 or home server 200.

The external certificate authority 300 checks whether the smart card 500 is one authenticated by referring to records of its own DB, and determines whether the reproducing device 100 is legitimate by checking the certificate 120 of each reproducing device 100 (S12). If it is determined that there is no abnormality, the external certificate authority transmits an approval message to the home server 500. On the contrary, if there exists an illegal device, the external certificate authority requests removal of the certificate for the relevant device and the smart card 500 removes the certificate for the relevant device (S15). Then, the smart card 500 creates a session key of the home server 200 by using the session key-creating module 560 (S16).

When the session key is created, the created session key should be transmitted to the reproducing device 100. However, before the transmission of the session key, a procedure for verifying whether the reproducing device 100 has been authenticated should be performed. To this end, the domain certificate 140 is authenticated (S18). It is preferred that the domain certificate 140 be verified through the certificate-verifying module 580 of the smart card 500. Such a verification procedure is performed as follows. The home server 200 that has received the domain certificate 140 of the reproducing device 100 through the home network searches for a number, which has been obtained through a hash function using the public key 510 of the smart card, in the verifying module 580 of the smart card 500. Then, the number obtained through a hash function using the public key 110 and the MAC address of the reproducing device 100 is searched for. The searched two numbers are compared with each other to verify the domain certificate 140.

The session key 540 is encrypted with the public key 110 of the verified reproducing device 100 and transmitted to the reproducing device 100 (S18). Each reproducing device 100 that has received the session key 540 decrypts the session key using its own private key 130 (S20). The home server 200 transmits data or a content key encrypted with the session key to the reproducing devices 100 having the same session key, and only the reproducing devices 100 having the session key can decrypt the encrypted data or the content key capable of decrypting the encrypted data.

In the present invention, as for the method of performing encryption using the public key and the private key, any encryption methods using asymmetric keys, e.g., RSA method, may be used. Further, as for the session key, any symmetric encryption methods, e.g., DES method, may be used.

According to embodiments of the present invention described above, a user can directly issue a domain certificate to devices that will establish a home domain by using a single smart card, so that he/she can establish the home domain with costs lower than those in the related art. Further, upon reestablishment of the home domain including a new device, a user can conveniently establish the home domain by simply inserting the smart card and performing a check procedure.

Moreover, since reproducing devices except a home server do not necessarily have their own smart cards, it is not necessary to prepare slots for smart cards in the reproducing devices. Since authentication can be performed by simply connecting a smart card terminal to an interface present in each of the reproducing devices, costs can be greatly reduced.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment (s). The invention extends to any novel one, or any novel combination, of the features disclosed in this specification (including any accompanying claims, abstract and drawings), or to any novel one, or any novel combination, of the steps of any method or process so disclosed.

## Claims

1. A method of establishing a home domain by using a smart card (500), the method comprising:
creating (S4) a domain certificate (140) corresponding to a reproducing device (100), the domain certificate being operable to establish the home domain, wherein the domain certificate is created by a certificate-creating module (570) of the smart card when the smart card is inserted into the reproducing device;
removing the smart card from the reproducing device after the creation of the domain certificate;
creating (S16) a session key (560) operable to further establish the home domain when the smart card is inserted into a home server (200) connected to the reproducing device through a network;
determining (S18) whether the domain certificate of the reproducing device is legitimate; and
transmitting (S20) the created session key to the reproducing device if the domain certificate of the reproducing device is legitimate.

2. The method as claimed in claim 1, further comprising:
issuing a certificate to the reproducing device from an external certificate authority;
providing the certificate from the reproducing device to the home server;
authenticating, by the external certificate authority, whether the reproducing device is legitimate;
transmitting the certificate from the home server to the external certificate authority and transmitting the created session key from the home server to the reproducing device only when the reproducing device is authenticated as a legitimate reproducing device by the external certificate authority.

3. The method as claimed in claim 1 or 2, wherein the creation of the domain certificate comprises using a private key of the smart card, and the verification of the domain certificate comprises using the public key of the smart card.

4. The method as claimed in claim 3, wherein the creation of the domain certificate further comprises encrypting a number, which has been obtained through a hash function using a MAC address and a public key of the reproducing device, with the private key of the smart card and storing the encrypted number in the reproducing device; and the verification of the domain certificate further comprises comparing, by the home server, a decrypted number obtained through decryption of the created domain certificate received from the reproducing device using the public key of the smart card with the encrypted number obtained through the hash function using the MAC address and public key of the reproducing device, and determining whether the numbers are the same.

5. The method as claimed in any preceding claim, further comprising:
encrypting, by the home server, the session key using a public key of the reproducing device;
transmitting the encrypted session key to the reproducing device; and
decrypting, by the reproducing device, the received session key using a private key of the reproducing device.

6. A smart card (500) for establishing a home domain, comprising:
a certificate-creating module (570) operable to create a certificate corresponding to a reproducing device, the certificate establishing the home domain when the smart card is inserted into the reproducing device;
a session key-creating module (560) operable to create a session key for enabling digital data transmission to the reproducing device connected to a home server through a network when the smart card is inserted into the home server; and
a certificate-verifying module (580) operable to receive a domain certificate from the reproducing device and verify the domain certificate when the smart card is inserted into the home server to transmit the created session key to the reproducing device.

7. The smart card as claimed in claim 6, further comprising a private key (530) necessary for the creation of the domain certificate, and a public key (510) necessary for the verification of the created domain certificate.

8. The smart card as claimed in claim 7, wherein the certificate-creating module is operable to create the domain certificate by encrypting a number, which has been obtained through a hash function using a MAC address and a public key of the reproducing device, with the private key of the smart card, and the certificate-verifying module compares a number obtained through decryption of the domain certificate using the public key of the smart card with the number obtained through the hash function using the MAC address and public key of the reproducing device and determines whether the two numbers are the same.
